# EUROPÄISCHE PATENTSCHRIFT

(11) **EP 3 180 850 B1**
(45) Veröffentlichungstag und Bekanntmachung des Hinweises auf die Patenterteilung: **22.05.2019**
(21) Anmeldenummer: 15750038.0
(22) Anmeldetag: 10.08.2015
(51) Int. Cl.: H02M 7/00, H02M 7/487

(54) **NIEDERINDUKTIVE SCHALTUNGSANORDNUNG EINES UMRICHTERS**
LOW INDUCTIVITY CIRCUIT ARRANGEMENT OF AN INVERTER
CIRCUIT FAIBLEMENT INDUCTIF D'UN CONVERTISSEUR

(30) Priorität: 11.08.2014 DE 102014111421
(43) Veröffentlichungstag der Anmeldung: 21.06.2017
(73) Patentinhaber: Woodward Kempen GmbH, 47906 Kempen (DE)
(72) Erfinder: EICHLER, Markus, 79761 Waldshut-Tiengen (DE); NIEDERER, Ralph, CH-4053 Basel (CH); STOLTE, Marc, CH-8049 Zürich (CH)
(74) Vertreter: Cohausz & Florack
(86) Internationale Anmeldenummer: PCT/EP2015/068396
(87) Internationale Veröffentlichungsnummer: WO 2016/023873

(56) Entgegenhaltungen:
- WO-A1-2013/069415
- US-A- 5 172 310

## Beschreibung

Die Erfindung betrifft eine Schaltungsanordnung eines Phasenarms eines 3-Punkt-Umrichters umfassend:
- drei DC-Anschlüsse für positives, negatives und Null-Potential und einen AC-Anschluss,
- ein erstes Paar in Serie geschalteter Halbleiterschaltelemente, welche das positive DC-Potential mit dem AC-Anschluss verbinden,
- ein zweites Paar in Serie geschalteter Halbleiterschaltelemente, welche das negative DC-Potential mit dem AC-Anschluss verbinden,
- zwei Schaltungsmittel, welche das DC-Null-Potential über jeweils eines der in Serie geschalteten Halbleiterschaltelemente jeden Paares mit dem AC-Anschluss verbinden,
- einen Kühlkörper mit einer ersten Kühlfläche, wobei die Halbleiterschaltelemente und die Schaltungsmittel in einer gemeinsamen Ebene auf der Kühlfläche des Kühlkörpers montiert sind,

Verbindungsschienen, welche sich senkrecht zur ersten Kühlfläche des Kühlkörpers erstrecken und eine elektrische Verbindung der Halbleiterschaltelemente mit den Schaltungsmitteln, den DC-Anschlüssen und dem AC-Anschluss der Schaltungsanordnung bereitstellen, wobei die Verbindungsschienen Mittel zur Kontaktierung der Halbleiterschaltelemente aufweisen.

3-Punkt-Umrichter können drei unterschiedliche DC-Spannungspotentiale (+DC, Null, -DC) auf einen AC-Anschluss schalten und so eine DC-Spannung in eine AC-Spannung, bzw. eine AC-Spannung in eine DC-Spannung umrichten. Als Phasenarm eines Umrichters bezeichnet man die Bauteile und Verbindungen, welche nötig sind, um zwischen dem positiven und negativen DC-Anschluss schaltungstechnisch einen AC-Anschluss bereit zu stellen. Die DC-Potentiale werden im Allgemeinen durch zwei in Reihe geschaltete Kapazitäten gebildet, so dass die Verbindung beider Kapazitäten das DC-Null-Potential bildet und die jeweils anderen Anschlüsse der Kapazitäten das positive, respektive negative Potential bilden. Damit das jeweilige DC-Potential auf den Ausgang geschaltet werden kann, sind mindestens vier Halbleiterschaltelemente (aktive elektronische Schalter, z.B. IGBTs) notwendig, welche zwischen dem positiven und dem negativen Potential in Reihe geschaltet sind. Hinzu kommen noch zwei weitere Schaltungsmittel, beispielsweise aktive oder passive elektronische Schalter, welche das DC-Null-Potential auf den Ausgang schalten. Man unterscheidet im Stand der Technik zwischen der NPC- (Neutral Point Clamped) und ANPC- (Advanced Neutral Point Clamped) Topologie, wobei passive Schalter wie Dioden (NPC) beziehungsweise aktive Schalter wie Transistoren (ANPC) zur Anbindung des DC-Null-Potentials eingesetzt werden. 3-Punkt-Umrichter werden häufig zur Bereitstellung von Spannungen mit mehr als 500 V, insbesondere auch zur Bereitstellung von Mittelspannungen von 1 kV bis 52 kV verwendet. Anwendungsgebiete finden sich in der Energieversorgung wie beispielsweise Windenergieanlagen aber auch bei Bahnantrieben und weiteren Gebieten, in denen große elektrische Leistungen umgerichtet werden müssen. Die Verwendung von 3-Punkt-Umrichtern weist zwei grundlegende Vorteile gegenüber 2-Punkt-Umrichtern, welche nur zwei DC-Potentiale bereitstellen können, auf. Zum einen können höhere Spannungen geschaltet werden, da je zwei Halbleiterschaltelemente in Reihe geschaltet sind und sich somit ihre Sperrspannungen addieren. Zum anderen können Filter, welche benötigt werden um die durch das Schalten der Schaltelemente erzeugten Oberschwingungen zu dämpfen, kleiner dimensioniert werden. Aufgrund der Schaltvorgänge der Schaltelemente können störende Spannungsspitzen entstehen, welche durch möglichst niederinduktive Verbindungen in der Schaltungsanordnung reduziert werden können. Hierzu kommen oftmals flächige Verbindungsschienen oder -platten zum Einsatz, die mechanisch möglichst nah beieinander platziert werden und in denen die Ströme entgegengesetzt fließen. Da dennoch Spannungsspitzen auftreten können, werden, um diese zu dämpfen, oftmals sogenannte Snubber direkt an den Anschlüssen der Halbleiterschaltelemente vorgesehen.

Aus der DE 42 32 763 A1 ist eine Schaltungsanordnung eines 3-Punkt-Umrichters bekannt, bei welcher die Minimierung parasitärer Induktivitäten in den Kommutierungskreisen durch eine Gleichgestaltung der Zuleitungen zu den Halbleiterschaltelementen in den einzelnen Phasen erreicht werden soll. In den Phasenarmen sind alle Halbleiterschaltelemente entlang einer Geraden auf einem Kühlkörper montiert und über dreilagige Verbindungsschienen untereinander und mit den Zwischenkreiskapazitäten kontaktiert. Aufgrund der dreilagigen Stromführung ist der Abstand stromführender Schichten nicht minimal und kann variieren, so dass ein Verbesserungspotential in Bezug auf die Unterdrückung parasitärer Induktivität besteht. Darüber hinaus erscheint ein kompakterer Aufbau des Umrichters, so dass dieser für die Anordnung in einem Schaltschrank optimiert ist, möglich.

Als Stand der Technik ist aus der Wo2013/069415 eine weitere Schaltungsanordnung eines 3-Punkt-Umrichters bekannt.

Aufgabe der vorliegenden Erfindung ist es daher ausgehend von dem genannten Stand der Technik eine Schaltungsanordnung eines 3-Punkt-Umrichters bereitzustellen, welche im Hinblick auf die Unterdrückung parasitärer Induktivität optimiert ist, gleichzeitig einen kompakten, einfachen Aufbau aufweist, so dass der Umrichter in einem Schaltschrank platzsparend und montagefreundlich eingebaut werden kann. Ferner ist es daher Aufgabe der Erfindung einen entsprechend aufgebauten Schaltschrank sowie eine Stromerzeugungsvorrichtung umfassend einen entsprechenden Schaltschrank vorzuschlagen.

Gemäß einer ersten Lehre der vorliegenden Erfindung wird die oben aufgezeigte Aufgabe durch eine gattungsgemäße Schaltungsanordnung eines Phasenarms eines 3-Punkt-Umrichters dadurch gelöst, dass die einzelnen Verbindungsschienen mindestens einen Bereich aufweisen, in welchem mindestens zwei Verbindungsschienen zueinander parallel und unmittelbar nebeneinander geführt werden und während des Umschaltens zwischen zwei Schaltzuständen die Stromflussrichtungen gleich sind, so dass die durch die Stromänderung in einer Verbindungsschiene erzeugte Flussänderung zumindest teilweise durch die Stromänderung in der anderen Verbindungsschiene ausgeglichen werden kann und jeweils genau zwei Verbindungsschienen, welche der Kontaktierung eines einzelnen Halbleiterschaltelements dienen, im Bereich der Anschlüsse des jeweiligen Halbleiterschaltelementes parallel zueinander und unmittelbar nebeneinander ausgeführt sind.

Die Ausgestaltung der Verbindungsschienen der erfindungsgemäßen Vorrichtung erlaubt im stationären Zustand, also während der Einschaltdauer eines Schaltzustandes, eine Verringerung der parasitären Induktivitäten durch eine entgegengesetzte Stromführung im Bereich der Anschlussbereiche der Halbleiterschaltelemente. Hierdurch addieren sich die entgegengesetzten magnetischen Felder der unmittelbar nebeneinander geführten, stromdurchflossenen Verbindungsschienen und das resultierende magnetische Feld wird minimiert oder nahezu vollständig eliminiert. Hinzu kommt, dass neben der entgegengesetzten Stromführung durch eine Stromführung in gleicher Stromflussrichtung in mindestens einem Bereich mindestens zweier Verbindungsschienen beim Umschalten zwischen zwei Schaltzuständen durch die Abnahme des Stromflusses in dem Bereich der einen Verbindungsschiene durch die gleichzeitige, vorzugsweise betragsmäßig identische Zunahme des Stromflusses in der anderen parallelen Verbindungsschiene in diesem Bereich ein nahezu konstanter magnetischer Fluss um beide Verbindungsschienen in dem Bereich erzeugt wird. Da die parallelen Verbindungsschienen unmittelbar nebeneinander angeordnet sind, wirken sie im Hinblick auf den nach außen erzeugten magnetischen Fluss also wie ein Leiter, der von einem konstanten Strom durchflossen wird. Der erzeugte magnetische Fluss ändert sich nicht, wenn beispielsweise der Stromfluss in den parallelen, unmittelbar nebeneinander angeordneten Bereichen der Schienen in Summe konstant bleibt. Aber auch eine teilweise Kompensation der Flussänderung in dem einen Verbindungsschienenbereich durch den parallel geführten anderen Verbindungsschienenbereich, beispielsweise wenn die parallel geführten Ströme nicht dem Betrag nach die gleiche Größe aufweisen, ermöglicht eine Reduzierung der Flussänderung in dem jeweiligen Verbindungsschienenbereich beim Umschalten zwischen zwei Schaltungszuständen und trägt damit zur Reduzierung von parasitären Induktivitäten bei. Da es insbesondere beim Umschalten zwischen den Schaltzuständen zu großen Stromänderungen innerhalb der Schaltungsanordnung kommt, wirkt sich die Reduzierung der Flussänderung in den parallelen Verbindungsschienenbereichen mit gleicher Stromflussrichtung deutlich aus. Die Gefahr der Erzeugung von Spannungsspitzen aufgrund parasitärer Induktivitäten sinkt damit weiter. Wie ausgeführt, verringert die erfindungsgemäße Vorrichtung gerade in transienten Zuständen die parasitären Induktivitäten sowohl durch Bereiche in denen der Strom in entgegengesetzter Richtung fließt als auch durch Bereiche in denen die Zu- und Abnahme des Stromflusses einen konstanten magnetischen Fluss oder eine Verringerung der Flussänderung erzeugt. Im Ergebnis wird damit eine sehr gute Unterdrückung von parasitären Induktivitäten während des gesamten Betriebs, also während der Einschaltdauer eines Schaltzustandes und auch während des Umschaltens, erreicht.

Gemäß einer ersten Ausgestaltung der erfindungsgemäßen Schaltungsanordnung sind die einzelnen Halbleiterschaltelemente des ersten und zweiten Paares der in Serie geschalteten Halbleiterschaltelemente jeweils entlang einer ersten Ausdehnungsrichtung in einer Reihe und die beiden Paare parallel zueinander entlang einer zweiten, gegenüber der ersten um 90 Grad gedrehten, Ausdehnungsrichtung auf dem Kühlkörper angeordnet sind und zwischen den beiden Paaren in Serie geschalteter Halbleiterschaltelemente die Schaltungsmittel für die Verbindung des DC-Null-Potentials mit dem AC-Anschluss angeordnet sind, wobei einzelne Verbindungsschienen zum elektrischen Verbinden der Halbleiterschaltelemente mit dem positiven und mit dem negativen DC-Potential vorgesehen sind, welche mindestens einen rechten Winkel in der Ebene der Kühlfläche des Kühlkörpers aufweisen, und einzelne Verbindungsschienen zum elektrischen Verbinden der in Serie geschalteten Halbleiterschaltelemente vorgesehen sind, welche mindestens zwei rechte Winkel in der Ebene der Kühlfläche des Kühlkörpers aufweisen und jeweils genau zwei Verbindungsschienen, welche der Kontaktierung eines einzelnen Halbleiterschaltelements dienen, zumindest im Bereich der Anschlüsse des jeweiligen Halbleiterschaltelementes parallel zueinander ausgeführt sind.

Durch die Anordnung von den in Serie geschalteten Halbleiterschaltelementen in jeweils zwei Reihen mit dazwischenliegenden, beispielsweise als Mittelpunktdioden ausgebildeten Schaltungsmitteln, kann der Platz auf dem entsprechenden Kühlkörper besser ausgenutzt werden. Darüber hinaus sind die elektrischen Verbindungen zwischen den einzelnen Elementen der Schaltungsanordnung dann besonders kurz. Auch hieraus resultiert eine Verringerung parasitärer Induktivitäten. Ferner kann die Positionierung der Halbleiterschaltelemente dazu genutzt werden, im Bereich der Anschlüsse der jeweiligen Halbleiterschaltelemente jeweils zwei Verbindungsschienen parallel und bevorzugt unmittelbar benachbart zueinander anzuordnen. Werden die Halbleiterschaltelemente durch beispielsweise eine Pulsweitenmodulation angesteuert, entstehen im Bereich der Anschlüsse der Halbleiterschaltelemente die größten transienten Stromänderungen, so dass durch eine optimierte Anordnung der Verbindungsschienen in diesem Bereich, nämlich eine parallele Anordnung von genau zwei Verbindungsschienen, eine besonders gute Unterdrückung parasitärer Induktivitäten erreicht wird. Die einzelnen Verbindungsschienen zum elektrischen Verbinden der Halbleiterschaltelemente mit dem positiven und mit dem negativen DC-Potential sowie dem nächsten in Serie geschalteten Halbleiterschaltelement ermöglichen darüber hinaus, dass die Verbindungsschienen möglichst einfach gehalten werden können und insofern kostengünstig ausgeführt sind. Der mindestens eine rechte Winkel in der Ebene der Kühlfläche des Kühlkörpers der Verbindungsschienen zum elektrischen Verbinden der Halbleiterschaltelemente mit dem positiven und negativen DC-Potential ermöglicht eine möglichst großflächig parallele Anordnung dieser Verbindungsschienen mit den Verbindungsschienen zum Kontaktieren der in Serie geschalteten Halbleiterschalterelemente einerseits sowie den Verbindungsschienen zum Anschluss des DC-Null-Potentials an die Schaltungsmittel andererseits. Die mindestens zwei rechten Winkel in der Ebene der Kühlfläche des Kühlkörpers der Verbindungsschienen zum elektrischen Verbinden der in Serie geschalteten Halbleiterschaltelemente ermöglichen den Einsatz von etwa U-förmig geformten Verbindungsschienen, die eine möglichst großflächige parallele Anordnung dieser Verbindungsschienen mit den Verbindungsschienen zum Anschluss des positiven und negativen DC-Potentials an die Halbleiterschaltelemente und der Verbindungsschiene der Halbleiterschaltelemente zum AC-Anschluss gewährleistet. Im Ergebnis wird mit einfach aufgebauten Verbindungsschienen im stationären Schaltzustand eine Minimierung der parasitären Induktivitäten durch entgegengesetzte Stromführung zumindest in den Anschlussbereichen der Halbleiterschaltelemente erreicht. Im transienten Zustand, also während des Umschaltens zwischen zwei Schaltzuständen, wird neben der erwähnten entgegengesetzten Stromführung in bestimmten Anschlussbereichen der Halbleiterschaltelemente zusätzlich durch eine Stromführung in gleicher Stromflussrichtung in anderen Bereichen der Verbindungsschienen, zum Beispiel zwischen positivem DC-Potential und einem Halbleiterschaltelement sowie dem DC-Null-Potential und einem Schaltungsmittel, durch eine Reduzierung der erzeugten magnetischen Flussänderung während des Umschaltens in einen anderen Schaltzustand die Minimierung parasitärer Induktivitäten erreicht. Als Halbleiterschaltelemente werden beispielsweise IGBT-Module verwendet. Denkbar ist aber auch die Verwendung von anderen Bauteilen als Halbleiterschaltelemente, beispielsweise Thyristoren oder GTO's.

Gemäß einer weiteren Ausgestaltung der Schaltungsanordnung weisen die Verbindungsschienen mindestens eine zumindest teilweise in eine Ebene, welche parallel zu der Ebene der Kühlfläche des Kühlkörpers ausgerichtet ist, abgewinkelte Lasche zur Kontaktierung der Halbleiterschaltelemente auf. Hierdurch wird auf einfache Weise eine Kontaktierung der Halbleiterschaltelemente erreicht, ohne dass der parallele Verlauf der Stromschienen auch in den Anschlussbereichen der Halbleiterschaltelemente aufgegeben werden muss. Gleichzeitig können die Verbindungsschienen leicht über Schraubverbindungen mit den Halbleiterschaltelementen elektrisch verbunden werden.

Sind gemäß einer weiteren Ausgestaltung die zwei Schaltungsmittel in einem gemeinsamen Gehäuse oder in zwei einzelnen Gehäusen angeordnet, können die als Schaltungsmittel vorgesehenen Mittelpunktdioden oder Transistoren schneller montiert werden, sofern diese in einem einzigen Gehäuse angeordnet sind. Des Weiteren kann dann der freie Platz auf dem Kühlkörper beispielsweise für eine Treiberschaltung zum Ansteuern der Halbleiterschaltelemente und der Schaltungsmittel genutzt werden. Größere Nennleistungen werden ermöglicht, wenn Schaltungsmittel in separaten Gehäusen genutzt werden. Hierbei sind die Angaben der Halbleiterhersteller heranzuziehen.

Ferner kann gemäß einer weiteren Ausführungsform die Verbindungsschiene, die den AC-Anschluss mit den Anschlüssen der Halbleiterschaltelemente verbindet, als gerade Schiene oder als Hut-förmige Schiene ausgebildet sein. Eine gerade Schiene kann beispielsweise verwendet werden, wenn das Gehäuse eines Schaltungsmittels zwischen den beiden Halbleiterschaltelementen, welche entfernt von den DC-Anschlüssen platziert sind, montiert wird. Bei der Hut-förmigen Schiene zur Verbindung der Halbleiterschalterelemente mit dem AC-Anschluss kann die Position der Schaltungsmittel in Richtung der DC-Anschlüsse verschoben werden, so dass die Zuleitungen zu den Schaltungsmitteln kürzer sind. In beiden Fällen ist sichergestellt, dass die Verbindungsschiene zur Kontaktierung des DC-Null-Potentials mit den Schaltungsmitteln und die Verbindungsschiene, die den AC-Anschluss mit den Anschlüssen für die Halbleiterschaltelemente verbindet, teilweise parallel und unmittelbar nebeneinander verlaufen.

Besonders einfach gelingt die Kontaktierung der Schaltungsmittel der Schaltungsanordnung dadurch, dass gemäß einer weiteren Ausgestaltung die Verbindungsschienen, welche die in Serie geschalteten Halbleiterschaltelemente elektrisch miteinander verbinden, zusätzlich jeweils mindestens eine in eine Ebene, welche parallel zu der Ebene der Kühlfläche des Kühlkörpers ausgerichtet ist, abgewinkelte Lasche zur Kontaktierung eines Schaltungsmittels aufweisen.

Ist zum Verbinden des DC-Null-Potentials mit den zwei Schaltungsmitteln eine Verbindungsschiene vorgesehen, welche mindestens zwei abgewinkelte Laschen zur Kontaktierung der Schaltungsmittel aufweist, so ist gewährleistet, dass die DC-Null-Verbindungsschiene parallel und unmittelbar neben der positiven und negativen DC-Verbindungsschiene geführt werden kann. Somit kann beim Umschalten zwischen den einzelnen Schaltzuständen stets gewährleistet werden, dass sich die Zunahme und die Abnahme des Stromflusses in den DC-Verbindungsschienen zu einem nahezu konstanten magnetischen Fluss summieren.

Bevorzugt wird die Schaltungsanordnung derart ausgebildet, dass unter Ausnahme der abgewinkelten Laschen zum Anschließen der Schaltungsmittel und der Halbleiterschaltelemente, der Anschlüsse der DC-Potentiale und des AC-Anschlusses stets zwei Verbindungsschienen parallel und unmittelbar nebeneinander angeordnet sind. Unmittelbar nebeneinander bedeutet, dass die Verbindungsschienen lediglich durch eine dünne Isolationsschicht voneinander getrennt sind. Hierdurch können die parasitären Induktivitäten größtmöglich minimiert werden.

Bevorzugt sind die Verbindungsschienen gemäß einer weiteren Ausführungsform isolierend beschichtetet, so dass ein minimaler Abstand zwischen den Verbindungsschienen, welche parallel verlaufen, gewählt werden kann. Eine solche Beschichtung kann beispielsweise mit dafür vorgesehenem Pulver im Wirbelsinterverfahren erfolgen. Darüber hinaus kann anstelle oder zusätzlich zu einer isolierenden Beschichtung selbstverständlich auch ein externes, zusätzliches Isolationsmittel verwendet werden.

Eine besonders kompakte Anordnung der Schaltungsanordnung wird gemäß einer weiteren Ausführungsform der Schaltungsanordnung dadurch erreicht, dass die DC-Anschlüsse in einer Ebene senkrecht zur Ebene der Kühlfläche und parallel zur Anordnung der Halbleiterschaltelemente verlaufen. Hierdurch lassen sich die DC-Anschlüsse problemlos mit als Kondensatorbänken ausgebildeten Zwischenkreiskapazitäten verbinden. Unter einer Kondensatorbank wird eine Mehrzahl an räumlich eng beieinander angeordneter Kondensatoren verstanden, deren DC-Anschlüsse über geeignete Mittel, z.B. Metallplatten oder -schienen, auf einfache Weise miteinander verbunden sind. Die DC-Anschlüsse der Schaltungsanordnung können dann beispielsweise direkt mit den Metallplatten welche die Anschlüsse der Kondensatoren untereinander verschalten, verbunden werden. Diese Anordnung nutzt zudem den Platz in einem Schaltschrank sehr gut aus.

Die aufgezeigte Aufgabe wird auch durch ein Schaltungsmodul umfassend mindestens zwei erfindungsgemäße Schaltungsanordnungen dadurch gelöst, dass beide Schaltungsanordnungen einen gemeinsamen Kühlkörper aufweisen, der Kühlkörper eine einer ersten Kühlfläche gegenüberliegende zweite Kühlfläche aufweist und auf jeder dieser beiden Kühlflächen jeweils mindestens eine Schaltungsanordnung eines Phasenarms eines 3-Punkt-Umrichters mit Halbleiterschaltelementen, Schaltungsmitteln und Verbindungsschienen vorgesehen ist, wobei vorzugsweise die DC-Anschlüsse beider Phasenarme in der gleichen Ebene verlaufen. Durch diese Anordnung von zwei Phasenarmen auf einem Kühlkörper kann eine besonders platzsparende Anordnung mehrerer Schaltungsanordnungen bereitgestellt werden. Beispielsweise können so zwei Phasenarme mittels ihrer DC-Anschlüsse direkt mit einer Kondensatorbank verbunden werden, ohne dass ein zusätzlicher Kühlkörper und damit verbunden zusätzliche Anschlüsse für das Kühlmedium benötigt werden. Diese beiden Phasenarme können vorzugsweise als Eingang und Ausgang eines 4-Quadrantenumrichters für die gleiche Phase, z.B. L1, L2 oder L3, vorgesehen werden. Über das Schaltungsmodul kann zudem eine besonders platzsparende, nach Phasen getrennte Anordnung der Schaltungsanordnungen in einem Schaltschrank erreicht werden.

Darüber hinaus löst ein Schaltschrank umfassend mindestens eine erfindungsgemäße Schaltungsanordnung oder mindestens ein erfindungsgemäßes Schaltungsmodul die oben gestellte Aufgabe, da der Schaltschrank durch die erfindungsgemäße Schaltungsanordnung bzw. Schaltungsmodule besonders kompakt aufgebaut werden kann.

Sind gemäß einer weiteren Ausgestaltung insgesamt drei Schaltungsmodule bestehend aus insgesamt sechs Schaltungsordnungen für drei Eingangsphasenarme und drei Ausgangsphasenarme im Schaltschrank vorgesehen, kann ein Schaltschrank beispielsweise einer Stromerzeugungsvorrichtung, insbesondere einer Windkraftanlage, zur Verfügung gestellt werden, welcher trotz kompaktem Aufbau eine hohe Leistung beispielsweise in ein Stromversorgungsnetz einspeisen kann. Die Eingangs- und Ausgangsphasen können durch die Verwendung der Schaltungsanordnungen auf einfache Weise räumlich getrennt werden, beispielsweise dergestalt, dass die Anschlüsse der Eingangsphasen nach unten und die Anschlüsse der Ausgangsphasen nach oben weisend angeordnet werden. Unten und oben bezieht sich hier auf die im Allgemeinen übliche Aufstelllage eines Schaltschranks. Natürlich sind auch andere Ausrichtungen der Anschlüsse, sowohl in unterschiedliche Richtungen als auch in die gleiche Richtung, denkbar.

Bevorzugt wird gemäß einer weiteren Lehre der Erfindung die oben aufgezeigte Aufgabe durch eine Vorrichtung zur Erzeugung von elektrischer Energie, insbesondere einer Windenergieanlage, umfassend mindestens einen erfindungsgemäßen Schaltschrank gelöst. Die Nennleistungen moderner Windenergieanlagen, seien es Anlagen mit doppelt gespeisten Asynchronmaschinen und einem Teilumrichter oder auch Anlagen mit Synchronmaschinen und einem Vollumrichter, steigen immer weiter an. Der Schaltschrank mit den Schaltungsanordnungen ermöglicht einen kompakten und höchst effizienten Aufbau, bei gleichzeitig hoher Leistungsdichte und einfacher Wartung.

Im Weiteren soll die Erfindung anhand von Ausführungsbeispielen in Verbindung mit der Zeichnung näher erläutert werden. Die Zeichnung zeigt in
- Fig. 1: ein Schaltbild eines Ausführungsbeispiels eines Phasenarms eines 3-Punkt-Umrichters,
- Fig. 2 bis Fig. 6: fünf Ausführungsbeispiele einer erfindungsgemäßen Schaltungsanordnung in einer Seitenansicht,
- Fig. 7 bis Fig. 11: in einer schematischen Darstellung Stromflüsse des ersten Ausführungsbeispiels während unterschiedlicher Schaltzustände,
- Fig. 12: ein aus zwei Schaltungsanordnungen zusammengesetztes Schaltungsmodul,
- Fig. 13 und Fig. 14: Schaltskizzen dreiphasiger, bekannter Umrichter in NPC- oder ANPC-Topologie,
- Fig. 15a), b): in einer Draufsicht sowie in einer Seitenansicht ein Ausführungsbeispiel eines erfindungsgemäßen Schaltschranks und
- Fig. 16: ein Ausführungsbeispiel einer Stromerzeugungsvorrichtung in Form einer Seitenansicht einer Windenergieanlage.

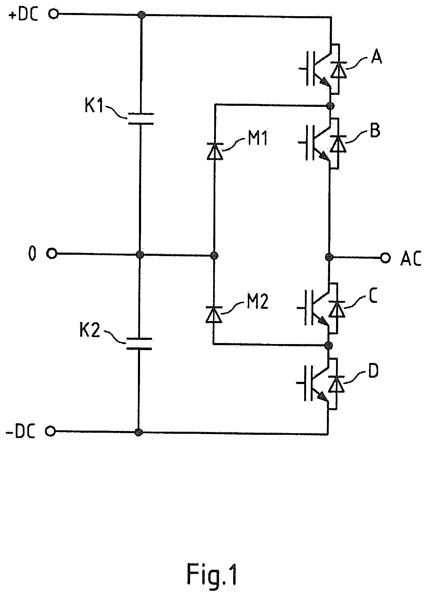

In Fig. 1 ist zunächst das elektrische Schaltbild eines Phasenarms eines 3-Punkt-Umrichters in NPC-Topologie nebst Zwischenkreiskapazitäten dargestellt. Zu erkennen sind zunächst zwei zwischen dem positiven und negativen DC-Potential in Serie geschaltete Zwischenkreiskapazitäten K1 und K2. Das positive und negative DC-Potential ist über je zwei in Serie geschaltete Halbleiterschaltelemente A, B sowie D, C mit einem AC-Anschluss AC verbunden. Darüber hinaus sind zwei Mittelpunktdioden M1 und M2 vorgesehen, welche das zwischen den Zwischenkreiskapazitäten K1 und K2 anliegende DC-Null-Potential über ein Halbleiterschaltelement B, C mit dem AC-Anschluss verbindet. Durch die in Fig. 1 dargestellte Schaltung ist es möglich, durch Schalten der Halbleiterschaltelemente A, B, C, D jeweils entweder das Potential +DC, 0-DC oder -DC am AC-Anschluss anzulegen.

Die Tabelle 1 zeigt die möglichen Schaltzustände des Phasenarms mit der zugehörigen Spannung am AC-Anschluss, wobei eine 1 bedeutet, dass das Halbleiterschaltelement geschlossen ist und 0 bedeutet, dass das Halbleiterschaltelement geöffnet ist.

**Tabelle 1**

| **Schaltzustand** | **A** | **B** | **C** | **D** | **Spannung am AC-Anschluss** |
|---|---|---|---|---|---|
| 1 | 1 | 1 | 0 | 0 | +DC |
| 2 | 0 | 1 | 1 | 0 | 0 |
| 3 | 0 | 0 | 1 | 1 | -DC |

Es gibt prinzipiell diese drei möglichen Schaltzustände, um ein DC-Spannungspotential, auch das Nullpotential, auf den AC-Anschluss zu schalten. Beim Umschalten von einem Zustand auf den anderen entstehen starke transiente Stromänderungen in abzuschaltenden Stromzweigen bzw. in neu aufgeschalteten Stromzweigen in der Schaltungsanordnung.

In der Regel werden als Halbleiterschaltelemente IGBT-Module, wie dies hier dargestellt ist, verwendet. Aufgrund der Schaltvorgänge in dem in Fig. 1 dargestellten Phasenarm können bei vorhandenen parasitären Induktivitäten Spannungsspitzen entstehen, welche dazu führen, dass einerseits die Stromabgabemöglichkeit eines Phasenarms begrenzt ist und andererseits zum Schutz der Halbleiterschaltelemente A, B, C, D sogenannte "Snubber circuits" vorgesehen werden müssen. Die aus dem Stand der Technik bekannte und in Fig. 1 dargestellte Schaltungsanordnung eines 3-Punkt-Umrichters in NPC-Topologie muss daher durch Verbindungen zwischen den einzelnen Halbleiterschaltelementen und Zwischenkreiskapazitäten aufgebaut werden, welche eine minimale parasitäre Induktivität gewährleisten.

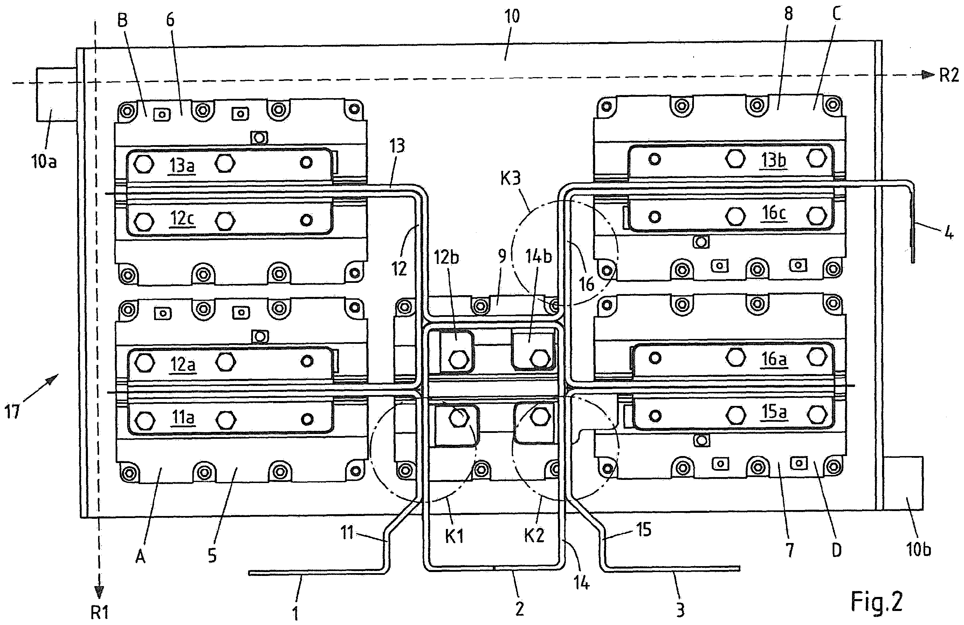

Fig. 2 zeigt ein erstes Ausführungsbeispiel einer erfindungsgemäßen Schaltungsanordnung 17, welche zunächst drei Anschlüsse 1, 2, 3 für positives, Null und negatives DC-Potential sowie einen AC-Anschluss 4 aufweist. Die Anschlussstelle 2 zwischen den Zwischenkreiskapazitäten liegt im vorliegenden Ausführungsbeispiel auf Null-Potential. Die beiden anderen Anschlussstellen 1, 3 liegen jeweils auf positivem bzw. negativem Potential. In Fig. 2 ist darüber hinaus ein erstes Paar in Serie geschalteter Halbleiterschaltelemente A, B dargestellt, welche in Modulgehäusen 5, 6 angeordnet sind. Das erste Paar in Serie geschalteter Halbleiterschaltelemente A, B verbindet das positive DC-Potential der Anschlussstelle 1 über Verbindungsschienen 11, 12, 13 mit dem AC-Anschluss 4. Darüber hinaus ist ein zweites Paar in Serie geschalteter Halbleiterschaltelemente D, C vorgesehen, welche das negative DC-Potential der Anschlussstelle 3 mit dem AC-Anschluss verbindet. Die beiden Halbleiterschaltelemente D, C sind ebenfalls in Gehäusen 7, 8 angeordnet.

In einem gemeinsamen Gehäuse 9 sind lediglich die Schaltungsmittel, welche als Mittelpunktdioden M1, M2 ausgebildet sind, angeordnet. Die Halbleiterschaltelemente A, B, C, D sind gemeinsam mit den Schaltungsmitteln M1 und M2 auf einer Kühlfläche eines Kühlkörpers 10 montiert. Der Kühlkörper 10 umfasst einen Kühlmitteleingang 10a und einen Kühlmittelausgang 10b. Durch Kühlmittelfluss kann über den Kühlkörper die von der Schaltungsanordnung abgegebene Wärme zumindest teilweise abtransportiert werden. Der Kühlkörper kann sowohl über ein flüssiges Kühlmittel als auch über Luft gekühlt sein. Insgesamt sind sechs einzelne Verbindungsschienen 11, 12, 13, 14,15,16, welche die Halbleiterschaltelemente A, B, C, D sowie die Schaltungsmittel M1 und M2 mit den Anschlussstellen für die DC-Potentiale 1, 2, 3 sowie dem AC-Anschluss 4 verbinden, vorgesehen. Die Verbindungsschienen erstrecken sich dabei senkrecht zur Ebene der Kühlfläche des Kühlkörpers 10 (aus der Zeichnungsebene hinaus) und weisen als Mittel zur elektrischen Kontaktierung der Schaltungsmittel M1, M2 oder der Halbleiterschaltelemente A, B, C, D abgewinkelte Laschen 11a, 12a, 12b, 12c, 13a, 13b, 14a, 14b, 15a, 16a, 16b, 16c auf, mit welchen die Verbindungsschienen entweder die Halbleiterelemente A, B, C, D oder die Schaltungsmittel M1 und M2 kontaktieren. Zum Verbinden werden beispielsweise Schraubverbindungen verwendet.

Die einzelnen Verbindungsschienen (11, 12, 13, 14, 15, 16) weisen zueinander parallel und unmittelbar nebeneinander geführte Bereiche (K1, K2, K3) auf, die möglichst groß gehalten werden können, da diese während des Umschaltens zwischen zwei Schaltzuständen die gleiche Stromflussrichtung aufweisen und so einen konstanten magnetischen Fluss erzeugen können. Dies wird im Einzelnen noch später beschrieben. Jeweils genau zwei Verbindungsschienen (11, 12 ,13, 15, 16), welche der Kontaktierung eines einzelnen Halbleiterschaltelements (A, B, C, D) dienen, sind im Bereich der Anschlüsse des jeweiligen Halbleiterschaltelementes parallel zueinander und unmittelbar nebeneinander ausgeführt, so dass durch eine entgegengesetzte Stromführung das resultierende magnetische Feld minimiert wird.

Wie man Fig. 2 entnehmen kann, sind die einzelnen Halbleiterschaltelemente des ersten Paares A, B und des zweiten Paares C, D jeweils entlang einer ersten Ausdehnungsrichtung R1 in einer Reihe und die beiden Paare parallel zueinander entlang einer zweiten, gegenüber der ersten um 90 Grad gedrehten, Ausdehnungsrichtung R2 auf der Kühlfläche des Kühlkörpers 10 angeordnet. Zwischen den Halbleiterschaltelementpaaren A, B und C, D sind die Schaltungsmittel M1 und M2 vorgesehen. Die einzelnen Verbindungsschienen 11 und 15 weisen jeweils mindestens einen rechten Winkel in der Ebene der Kühlfläche des Kühlkörpers 10 auf, während die Verbindungsschienen 12 und 16 mindestens zwei rechte Winkel in der Ebene der Kühlfläche des Kühlkörpers 10 aufweisen und somit im Wesentlichen U-förmig ausgebildet sind. Des Weiteren ist zu erkennen, dass auch die Verbindungsschiene 13, welche die Halbleiterschaltelemente B und C mit dem AC-Anschluss 4 verbindet sowie die Verbindungsschiene 14, über die das DC-Null-Potential mit den Schaltungsmitteln M1 und M2 verbunden ist, über rechte Winkel in der Ebene der Kühlfläche verfügen. Durch die Anordnung der rechten Winkel ist es möglich, wie in Fig. 2 zu erkennen ist, stets zwei Verbindungsschienen parallel und unmittelbar nebeneinander anzuordnen, ohne dass die flächige Ausführung der Verbindungsschienen geändert werden muss. Zudem zeigt Fig. 2, dass die Stromführung zwischen den einzelnen Elementen der Schaltungsanordnung aufgrund der Position auf der Kühlfläche des Kühlkörpers 10 sehr kurz gehalten werden können. Insbesondere sind die Stromführungen in beiden Zweigen der Schaltungsanordnung symmetrisch aufgebaut. In dem vorliegenden Ausführungsbeispiel sind zumindest in dem Bereich der Anschlüsse der Halbleiterschaltelemente A, B, C, D jeweils genau zwei Verbindungsschienen parallel und unmittelbar nebeneinander ausgeführt, so dass hier durch transiente Stromflussänderungen hervorgerufene parasitäre Induktivitäten minimiert werden können. Durch den unmittelbar benachbarten und parallelen Aufbau der Verbindungsschienen ergibt sich ein besonders geringer Abstand zwischen den stromführenden Schienen, so dass die Unterdrückung parasitärer Induktivität hier maximal ist.

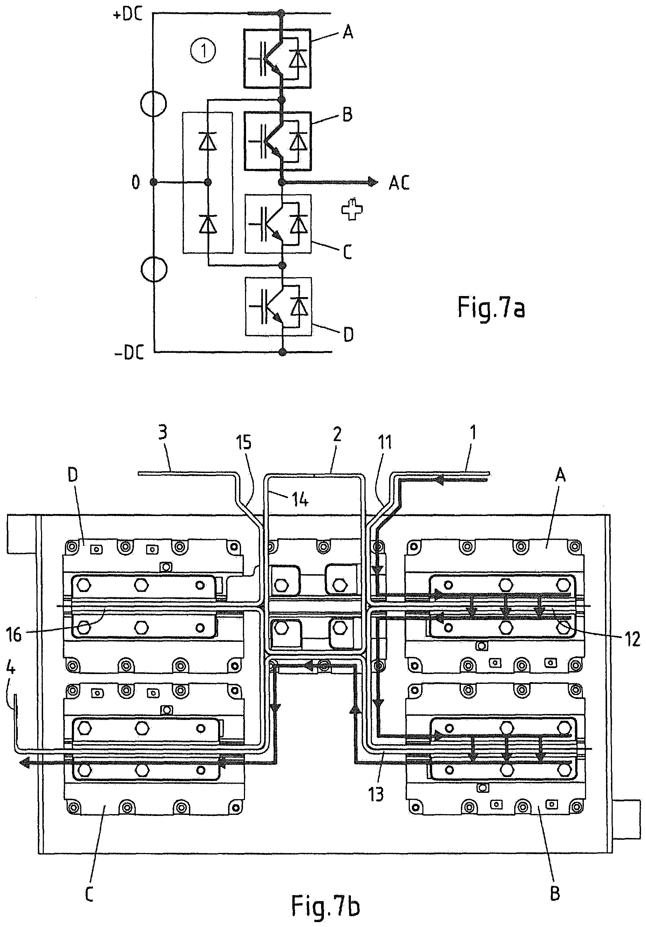

Darüber hinaus ist in dem Ausführungsbeispiel erkennbar, dass die Verbindungsschiene 13 zum Verbinden der Halbleiterschaltelemente B, C mit dem AC-Anschluss 4 als Hut-förmige Schiene ausgebildet ist und zusätzlich der AC-Anschluss 4 um 90 Grad abgewinkelt ist. Hut-förmig bedeutet hier, dass die Verbindungsschiene 13 insgesamt viermal rechtwinklig gebogen ist, wovon je zwei Winkel linksdrehend und zwei Winkel rechtsdrehend sind und sich Anfang und Ende der Schiene in derselben Ebene befinden. Die Verbindungsschiene 13 weist so an jedem Punkt eine unmittelbar benachbarte, stromführende Verbindungsschiene auf, so dass der Einfluss parasitärer Induktivität maximal unterdrückt wird.
Die U-förmige Zuführung des DC-Null-Potentials von der Anschlussstelle 2 zu den Schaltungsmitteln M1 und M2 gewährleistet eine möglichst großflächige Parallelführung der DC-Null Schiene 14 mit den positiven und negativen DC-Potential-Schienen 11 und 15. Insbesondere die Bereiche K1 und K2 werden während des Umschaltens von einem Schaltzustand in einen anderen derart mit Strom durchflossen, dass beispielsweise der Stromfluss vom DC-Null-Potential zunimmt, während der Stromfluss vom positiven oder negativen DC-Potential zu den Halbleiterschaltelementen A, D abnimmt. Dies gilt auch für den Bereich K3, welcher durch die Hut-förmige Verbindungsschiene 13 und die Verbindungsschiene 16 gebildet wird. Hierdurch wird erreicht, dass die beim Umschalten zwischen den Schaltzuständen auftretenden transienten Stromänderungen keine oder nur reduzierte Flussänderungen und damit unerwünschte Induktivitäten nach sich ziehen. Im Detail wird dies später Anhand der Figuren 7 - 11 beschrieben.

In dem in Fig. 2 dargestellten Ausführungsbeispiel ist gewährleistet dass unter Ausnahme der abgewinkelten Laschen zum Anschließen der Schaltungsmittel und der Halbleiterschaltelemente, der Anschlüsse der DC-Potentiale und des AC-Anschlusses stets zwei Verbindungsschienen 11, 12, 13, 14, 15, 16 parallel und unmittelbar nebeneinander angeordnet sind. Insbesondere kann durch isolierend beschichtete Verbindungsschienen 11, 12, 13, 14, 15, 16 gewährleistet werden, dass der Abstand der stromführenden Verbindungsschienen 11, 12, 13, 14, 15, 16 untereinander minimal ist und damit die Unterdrückung von parasitären Induktivitäten maximal. Wie bereits erläutert weisen die Verbindungsschienen, welche die in Serie geschalteten Halbleiterschaltelemente A, B bzw. C, D miteinander verbinden, zusätzlich jeweils eine in eine zu der Ebene der Kühlfläche des Kühlkörpers parallel ausgerichtete Ebene abgewinkelte Lasche zur Kontaktierung eines Schaltungsmittels M1, M2 auf.

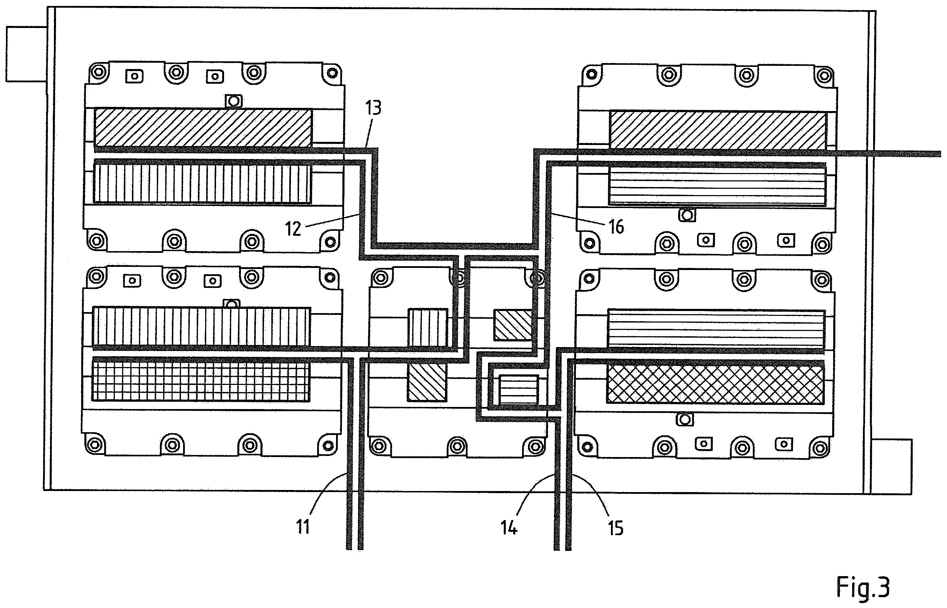

In Fig. 3 ist in einer schematischen Seitenansicht ein weiteres Ausführungsbeispiel einer erfindungsgemäßen Schaltungsanordnung dargestellt, wobei die Verbindungsschienen 11 und 15 ebenfalls mindestens einen und die Verbindungsschienen 12 und 16 mindestens zwei rechte Winkel in Ebene der Kühlfläche des Kühlkörpers aufweisen, jedoch zum Anschluss der Schaltungsmittel M1, M2 weitere Biegungen bzw. rechte Winkel erfordern, um eine im Wesentlichen parallele Anordnung von je zwei Verbindungsschienen zu ermöglichen. Der Aufbau der Verbindungsschienen in dem Ausführungsbeispiel in Fig. 3 gewährleisten daher bei kompaktem Aufbau der Schaltungsanordnung des Phasenarms ebenfalls eine sehr gute Unterdrückung parasitärer Induktivität.

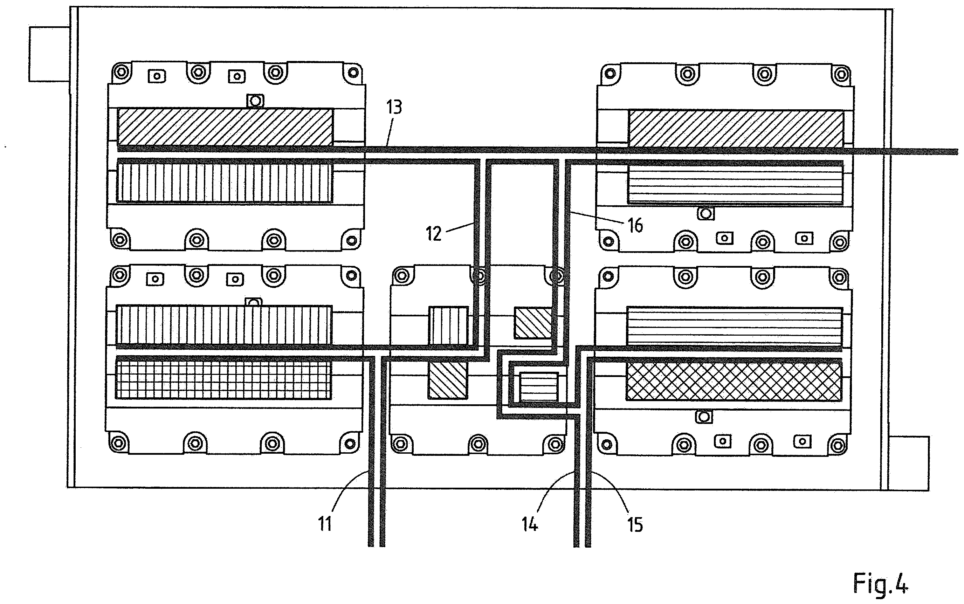

Dies gilt auch für das Ausführungsbeispiel aus Fig. 4, welches eine als gerade Schiene ausgebildete Verbindungsschiene 13 zum Verbinden der Halbleiterschaltelemente B, C mit dem AC-Anschluss 4 aufweist. In Fig. 4 ist zu erkennen, dass zur Gewährleistung einer im Wesentlichen parallelen Anordnung von je zwei Verbindungsschienen die Formgebung der Verbindungsschienen, insbesondere hier der Verbindungsschiene 14 komplexer ausfällt als im Ausführungsbeispiel aus Fig. 2. Allerdings gewährleistet auch die Fig. 4 eine maximale Kompensation parasitärer Induktivitäten bei kompaktem Aufbau auf einer Kühlfläche eines Kühlkörpers.

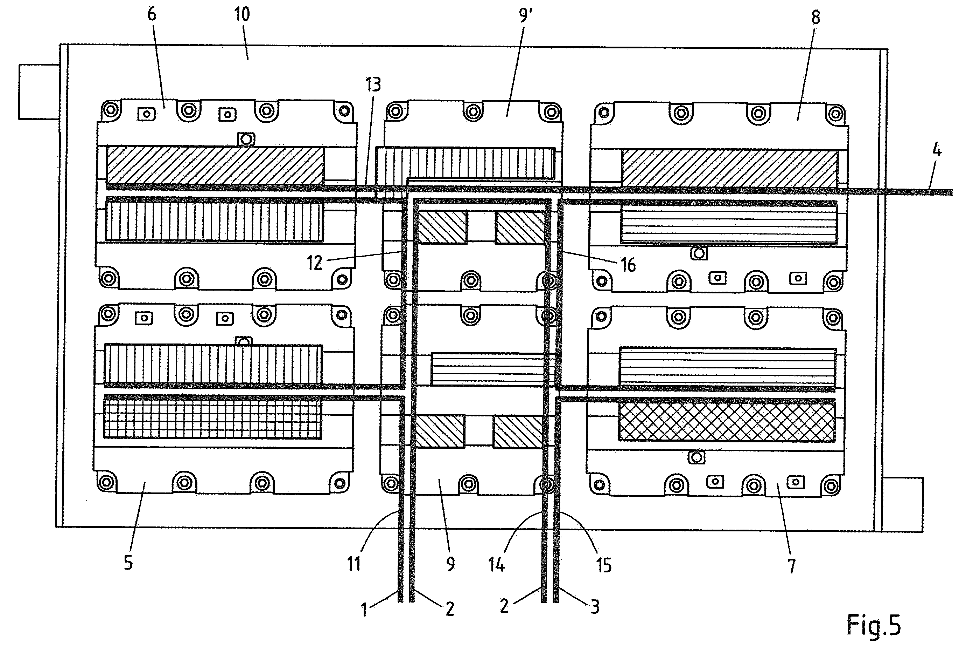

Einen weiteren besonders einfachen Aufbau zeigt die Fig. 5, bei welcher die Schaltungsmittel M1 und M2 in zwei Gehäuse 9 und 9' aufgeteilt sind. Hierdurch können mit einer Schaltungsanordnung höhere Leistungen geschaltet werden, als bei Integration der Schaltungsmittel in einem Gehäuse. Im Unterschied zu dem Ausführungsbeispiel aus Fig. 2 ist hier die DC-Null Schiene 14 derart gestaltet, dass sie die beiden in separaten Gehäusen angeordneten Schaltungsmittel M1 und M2 mit dem DC-Null-Potential verbindet. Die Verbindungsschiene 13 ist hier als einfache gerade Schiene ausgeführt. Die anderen Schienen 11, 12, 15 und 16 bleiben unverändert. Somit ergibt sich eine einfache Möglichkeit zur Anpassung der Schaltungsanordnung bei Verwendung von Schaltungsmitteln in separaten Gehäusen.

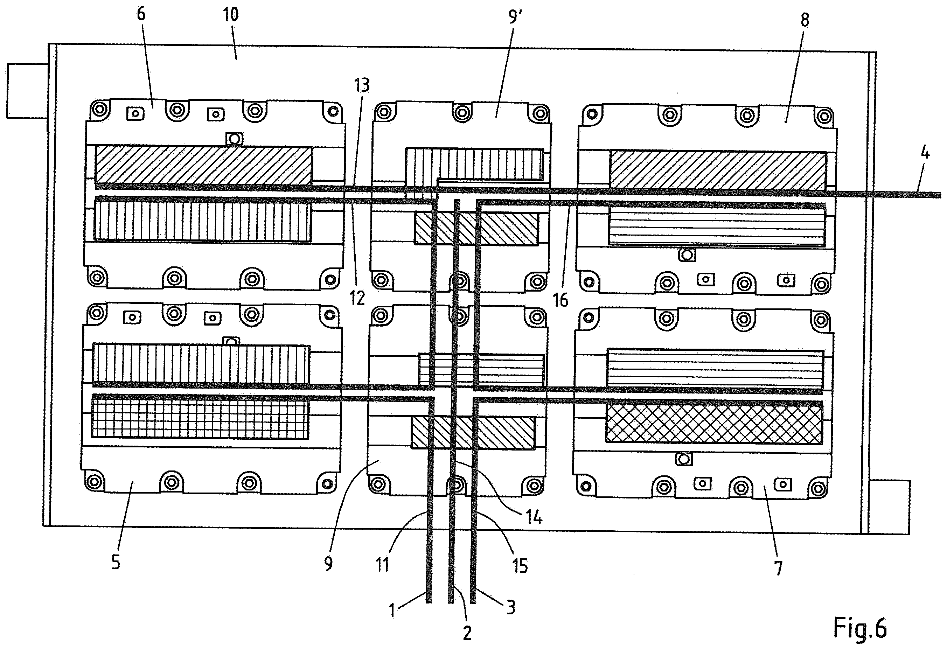

Eine alternative Ausführung zeigt die Fig. 6. Die DC-Null-Verbindungsschiene 14 fällt als einfache gerade Verbindungsschiene aus. Die in Fig. 6 dargestellte Schaltungsanordnung weist besonders einfach ausgestaltete Verbindungsschienen auf, jedoch sind hier teilweise drei Schienen parallel geführt. Dennoch weist auch diese Variante eine verbesserte Unterdrückung parasitärer Induktivität auf.

Fig. 7 bis Fig. 11 zeigen nun die in Tabelle 1 erwähnten drei Schaltzustände sowie die transienten Vorgänge beim Umschalten zwischen ihnen für das in Fig. 2 dargestellte Ausführungsbeispiel Fig. 7a) zeigt zunächst das zugehörige elektrische Schaltbild der Schaltungsanordnung mit durchgeschalteten Halbleiterschaltelementen A, B entsprechend dem in Tabelle 1 dargestellten Schaltzustand Nr. 1. Die Halbleiterschaltelemente C, D sind gesperrt, so dass der Stromfluss nur über die Halbleiterschaltelemente A, B vom positiven DC-Potential auf den AC-Anschluss 4 verläuft.

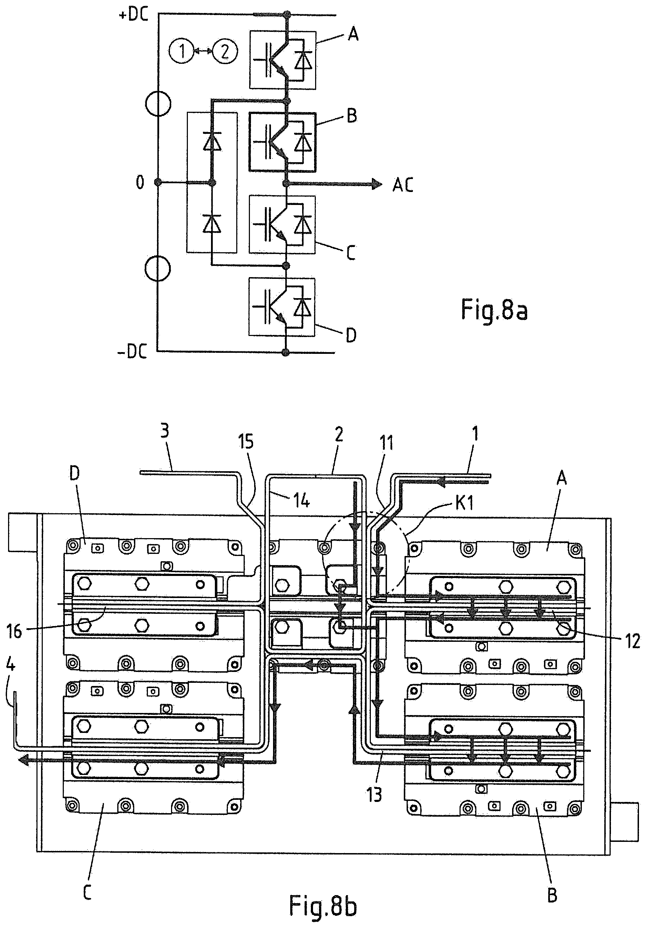

Beim Umschalten vom Schaltzustand Nr. 1 auf den Schaltzustand Nr. 2 tritt ein transienter Zustand auf, welcher in Fig. 8a) und b) dargestellt ist. In diesem transienten Zustand nimmt der Stromfluss in dem abzuschaltenden Zweig ab, während er im zuzuschaltenden Zweig zunimmt. Diese Änderungen des Stromflusses führen aufgrund parasitärer Induktivitäten potentiell zu unerwünschten Spannungsspitzen. In Fig. 8a) sind die transienten Ströme eingezeichnet. Der Strom durch den Transistor A nimmt ausgehend von dem Schaltzustand 1 in Fig. 7 ab, gleichzeitig steigt der Strom durch das Schaltungsmittel M1 an. Wie in den Fig. 7b), 8b) und 9b) zu erkennen ist, fließt der Strom im Schaltzustand 1 zunächst von der Anschlussstelle 1 über die Verbindungsschiene 11 in den Transistor A. Dieser Strompfad wird abgeschaltet, dafür fließt der Strom dann im Schaltzustand 2 von der Anschlussstelle 2 über die Verbindungsschiene 14 in die Diode M1. Da die beiden Verbindungsschienen 11 und 14 im Bereich K1 parallel und unmittelbar nebeneinander ausgeführt sind und der Stromfluss in den beiden Schienen in die gleiche Richtung erfolgt, kompensieren sich die Zunahme und Abnahme des Stromflusses in den unmittelbar benachbarten Bereichen K1 der Verbindungsschienen, so dass die Flussänderung im Bereich K1 geringer ist. Da der Strom allerdings auch durch den anderen Schenkel der in etwa U-förmig ausgebildeten Verbindungsschiene 14 fließt, wird die Flussänderung aufgrund des sich ändernden Stromflusses in Verbindungsschiene 11 teilweise kompensiert und damit reduziert.

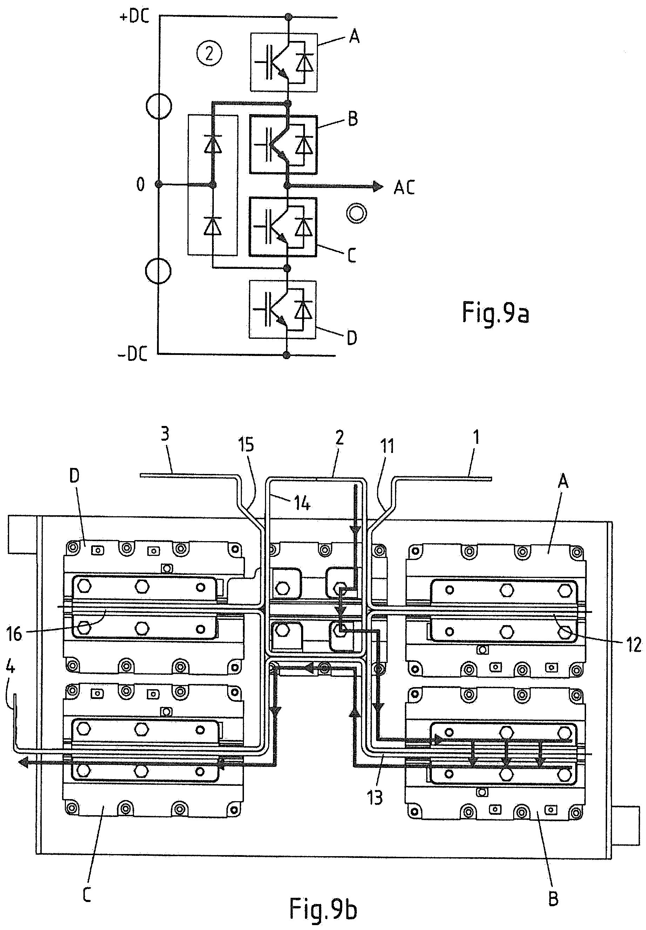

Fig. 9 zeigt nun den Schaltzustand 2, bei welchem das DC-Null-Potential elektrisch mit dem AC-Anschluss 4 verbunden wird.

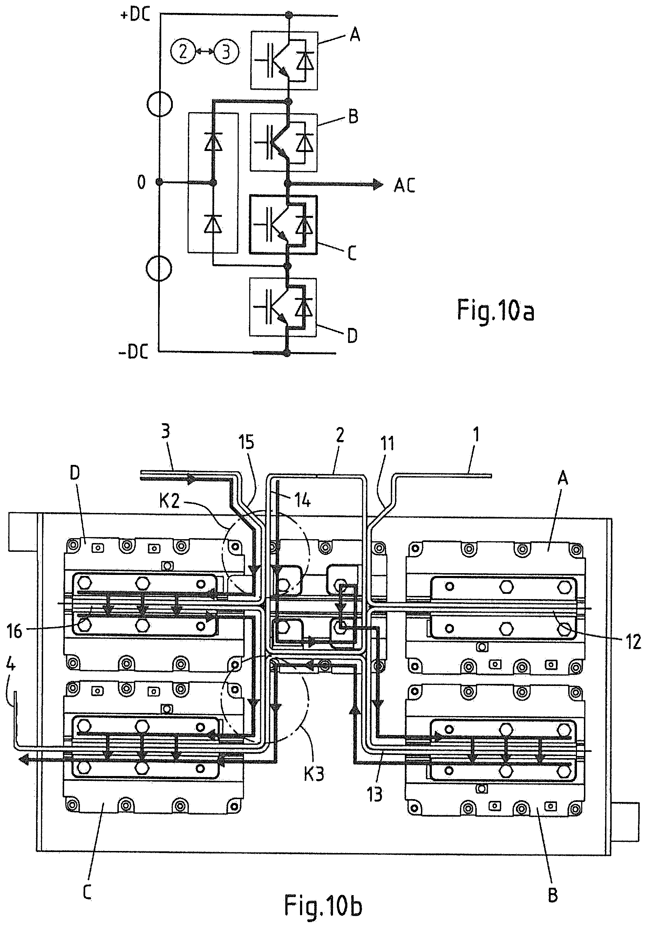

Das Umschalten vom zweiten auf den dritten Schaltzustand zeigt Fig. 10. Zu erkennen ist, wie gemäß Fig. 10a) der Stromfluss über die Mittelpunktdiode M1 zum AC-Anschluss 4 abnimmt und gleichzeitig der Stromfluss vom negativen DC-Potential über die Halbleiterschaltelemente C und D zunimmt. Wie in der Stromführung in Fig. 10b) zu erkennen ist, verlaufen die Verbindungsschienen 14 und 15 im Bereich K2 parallel und unmittelbar nebeneinander und der zu- bzw. abnehmende Stromfluss erfolgt in der gleichen Richtung, so dass auch hier die magnetische Flussänderung verringert wird und somit das Auftreten von Spannungsspitzen reduziert werden kann. Im Bereich K3 verlaufen die Verbindungsschienen 13 und 16 ebenfalls parallel nebeneinander. Beide Verbindungsschienen 13 und 16 weisen beim Umschalten, wie Fig. 10 zeigt, gleiche Stromrichtungen auf. Der Stromfluss im Bereich K3, in welchem die Verbindungsschienen 13 und 16 parallel verlaufen, bleibt konstant, da hier die Zu- und Abnahme des Stromflusses in der gleichen Richtung und betragsmäßig gleich erfolgt. Hierdurch bleibt der den Bereich K3 umschließende magnetische Fluss während des Umschaltens zwischen den Zuständen gleich. Ändert sich der magnetische Fluss nicht, wird keine Spannung induziert und dem Auftreten von unerwünschten Spannungsspitzen wird auf diese Weise also entgegengewirkt.

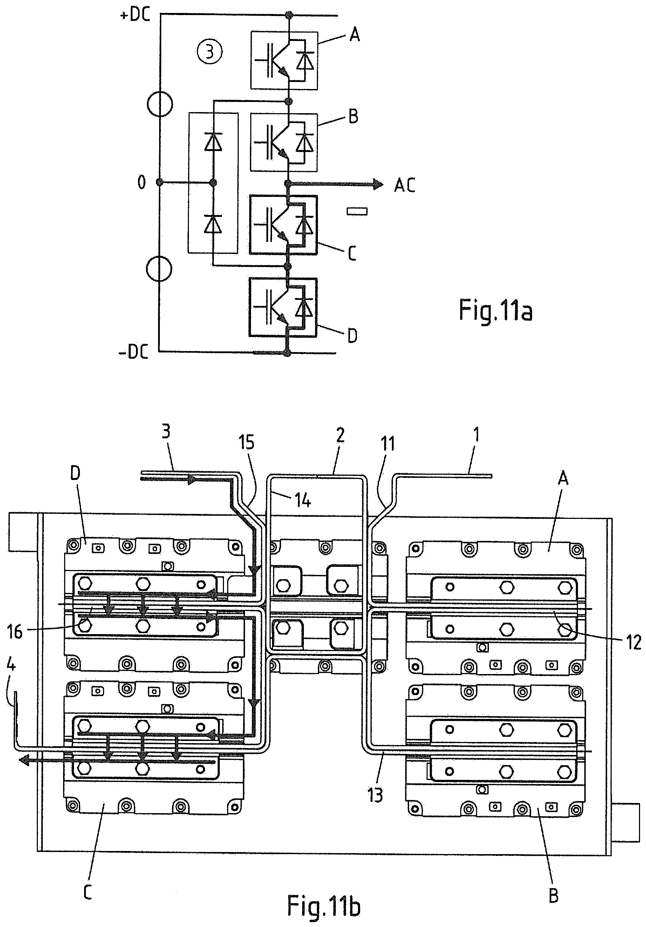

Fig. 11 zeigt schließlich den dritten Schaltzustand, bei welchem das negative DC-Potential mit dem AC-Anschluss 4 verbunden ist.

Neben der beschriebenen Vermeidung von magnetischen Flussänderungen bei transienten Vorgängen zwischen den einzelnen Schaltzuständen liegt ein weiterer Vorteil des erfindungsgemäßen Aufbaus der Schaltungsanordnung darin, dass durch entgegengesetzten Stromfluss in zwei benachbarten Verbindungsschienen das magnetische Feld und somit auch die parasitäre Induktivität reduziert wird. Dieser Effekt kommt hauptsächlich bei stationären Vorgängen zum Tragen, d.h. solange ein Schaltzustand andauert. Die Figuren 7, 9 und 11 entsprechend den Schaltzuständen 1, 2 und 3 verdeutlichen das. So ist beispielsweise in der Fig. 7b) zu erkennen, dass die zwei Schienen 11 und 12, welche zum Transistor A führen vom gleichen Strom jedoch in entgegengesetzter Richtung durchflossen werden. Gleiches gilt für die Schienen 12 und 13, welche zum Transistor B führen. Die Figuren 9 und 11 verdeutlichen dies entsprechend für die Schaltzustände 2 und 3.

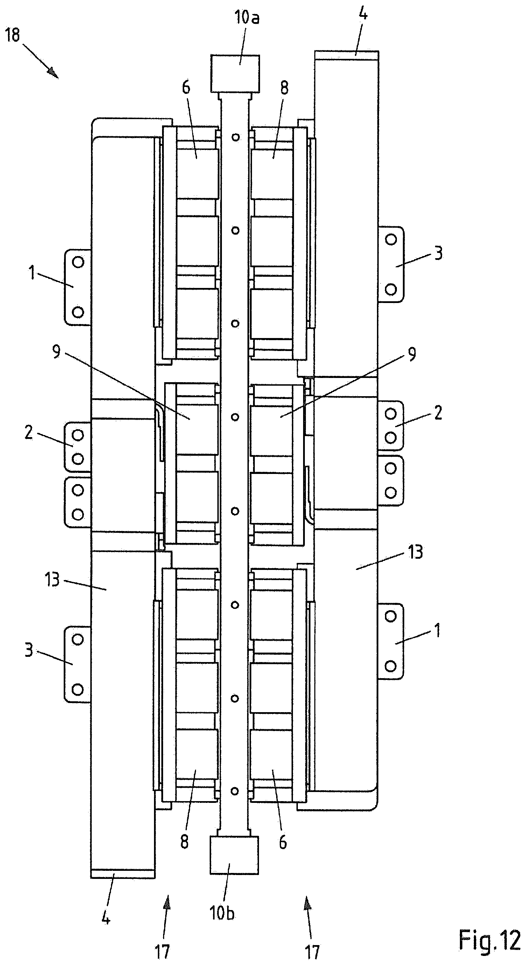

Figur 12 zeigt ein Schaltungsmodul 18, welches sich aus zwei aus der Fig. 2 bekannten erfindungsgemäßen Schaltungsanordnungen 17, welche auf den gegenüberliegenden Seiten eines gemeinsamen Kühlkörpers 10 montiert sind, zusammensetzt. Dargestellt sind die Transistoren 6, 8, die Dioden 9, die Verbindungsschienen 13, die DC-Anschlüsse 1, 2, 3, die AC-Anschlüsse 4 sowie die Kühlmittelanschlüsse 10a und 10b. Somit kann auf einfache Weise und räumlich kompakt eine Eingangs- und Ausgangsphase für einen Umrichter realisiert werden. Gut zu erkennen ist, dass die jeweiligen AC-Anschlüsse 4 in entgegengesetzte Richtungen weisen, wodurch ein besonders kompakter Aufbau eines Schaltschranks ermöglicht wird. Selbstverständlich ist auch ein Aufbau denkbar, bei welchem die AC-Anschlüsse in gleiche oder beliebige andere Richtungen weisen.

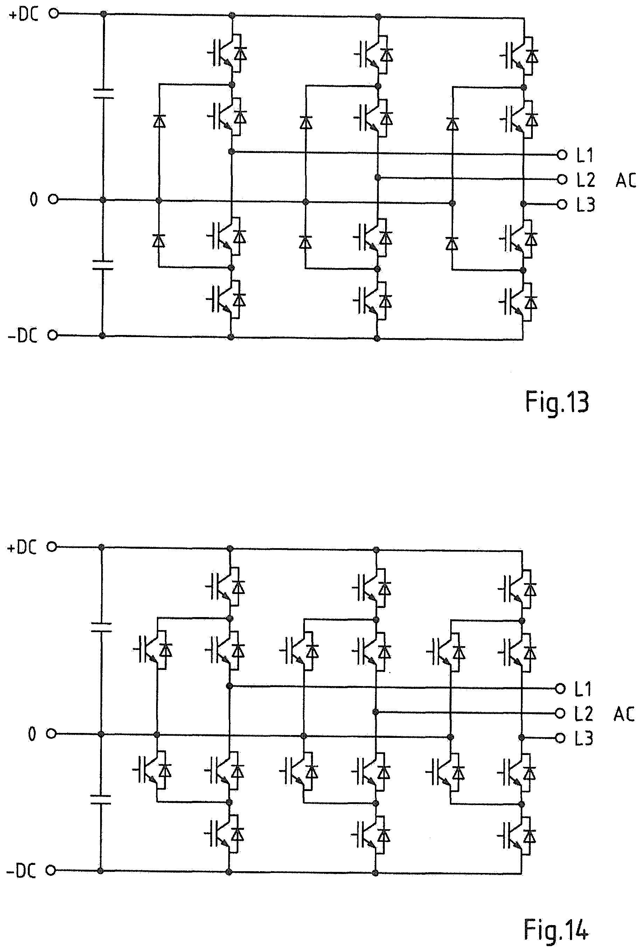

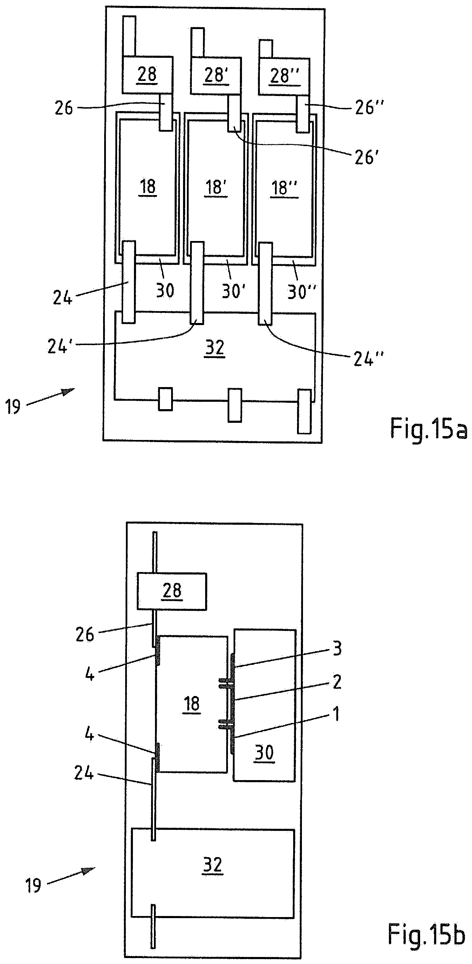

In den Fig. 2 bis Fig. 11 war bisher lediglich ein Phasenarm eines Zweigmoduls dargestellt. Üblicherweise werden die 3-Punkt-Umrichter allerdings für drei Phasen ausgelegt. Die elektrischen Schaltbilder solcher aus dem Stand der Technik bekannten 3-phasigen 3-Punkt-Umrichter zeigen Fig. 13 für die NPC-Topologie sowie Fig. 14 für die ANPC-Topologie, bei welcher die Mittelpunktdioden durch weitere Halbleiterschaltelemente, hier Transistoren, ausgetauscht sind. Ein entsprechender dreiphasiger 3-Punkt-Umrichter ist in Fig. 15 in einem Schaltschrank unter Verwendung der erfindungsgemäßen Schaltanordnung schematisch dargestellt.

Eine schematische Draufsicht sowie eine schematische Seitenansicht eines erfindungsgemäßen Schaltschranks 19, welcher mindestens eine erfindungsgemäße Schaltungsanordnung aufweist, zeigen Fig. 15a) und 15b). Wie in Fig. 15a) angedeutet ist, sind in diesem Schaltschrank drei Schaltungsmodule 18, 18', 18", welche sich aus je zwei Schaltungsanordnungen 17 auf einem gemeinsamen Kühlkörper 10 zusammensetzen, vorgesehen. Hiermit kann ein kompletter 4-Quadranten-Umrichter für drei Phasen aufgebaut werden, d.h. dass drei Phasenarme als Eingang, zum Umrichten von AC nach DC, und drei Phasenarme als Ausgang, zum Umrichten von DC nach AC, vorgesehen sind. Fig. 15b) zeigt, wie die erfindungsgemäßen Schaltungsanordnungen über die DC-Anschlüsse 1, 2, 3 mit den Zwischenkreiskondensatoren, hier als Kondensatorbänke 30, 30', 30" dargestellt, verbunden sind. Die Kondensatorbänke 30, 30', 30" sind elektrisch parallel geschaltet. Die AC-Anschlüsse 4 der Schaltungsanordnungen sind jeweils auf der gegenüberliegenden Seite ausgeführt und über elektrische Verbindungsschienen 24 und 26 mit einer Netzdrossel 32 und du/dt-Filtern 28, 28', 28" verbunden. Hieran anschließend erfolgt dann der Anschluss an ein Stromversorgungsnetz bzw. einen Generator, beispielsweise einer Windenergieanlage. Durch die Lage der AC-Anschlüsse 4 lässt sich eine räumliche Trennung der Eingangs- und Ausgangsphasen erzielen und damit einhergehend ein besonders kompakter und platzsparender Schaltschrankaufbau erreichen, indem weitere Bauteile, wie die Netzdrossel 32 oder du/dt-Filter 28, mit minimalem Abstand und somit auch minimalen Verbindungslängen im Schaltschrank platziert werden können.

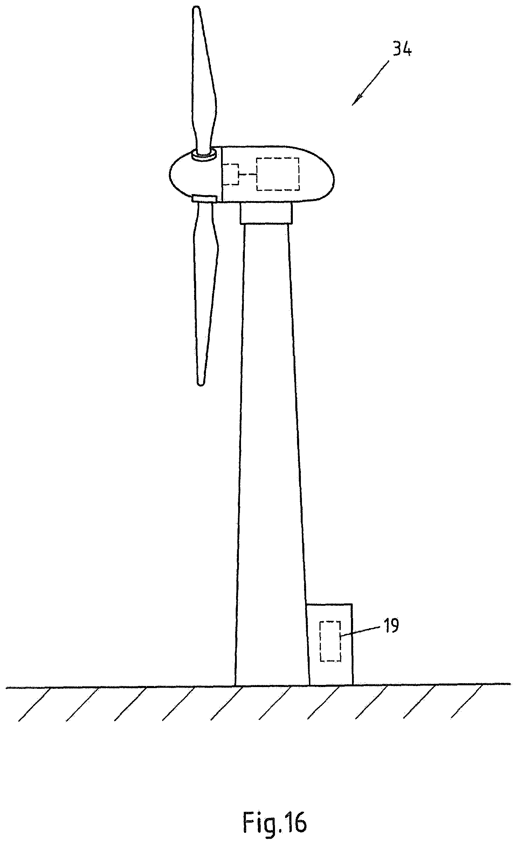

Bevorzugt wird ein entsprechender Schaltschrank 19 in einer Windenergieanlage 34, wie sie in Fig. 16 dargestellt ist, angeordnet, um die elektrische Energie des Generators derart umzurichten, dass sie beispielsweise in ein Stromversorgungsnetz eingespeist werden kann. Weitere Verwendungen liegen in anderen Vorrichtungen zur Erzeugung von elektrischer Energie, also Generatoren insbesondere mit schwankender Drehzahl, aber auch in der Ansteuerung von Motoren.

## Patentansprüche

1. Schaltungsanordnung eines Phasenarms eines 3-Punkt-Umrichters umfassend:
- drei DC-Anschlüsse (1, 2, 3) für positives, negatives und Null-Potential und einen AC-Anschluss (4),
- ein erstes Paar in Serie geschalteter Halbleiterschaltelemente (A, B), welche das positive DC-Potential mit dem AC-Anschluss (4) verbinden,
- ein zweites Paar in Serie geschalteter Halbleiterschaltelemente (C, D), welche das negative DC-Potential mit dem AC-Anschluss (4) verbinden,
- zwei Schaltungsmittel (M1, M2), welche das DC-Null-Potential über jeweils eines der in Serie geschalteten Halbleiterschaltelemente jeden Paares (B, C) mit dem AC-Anschluss (4) verbinden,
- einen Kühlkörper (10) mit einer ersten Kühlfläche, wobei die Halbleiterschaltelemente (A, B, C, D) und die Schaltungsmittel (M1, M2) in einer gemeinsamen Ebene auf der ersten Kühlfläche des Kühlkörpers montiert sind,
- Verbindungsschienen (11, 12, 13, 14, 15, 16), welche sich senkrecht zur ersten Kühlfläche des Kühlkörpers (10) erstrecken und eine elektrische Verbindung der Halbleiterschaltelemente (A, B, C, D) mit den Schaltungsmitteln (M1, M2), den DC-Anschlüssen (1, 2, 3) und dem AC-Anschluss (4) der Schaltungsanordnung bereitstellen, wobei die Verbindungsschienen (11, 12, 13, 14, 15, 16) Mittel zur Kontaktierung der Halbleiterschaltelemente (A, B, C, D) aufweisen,
wobei
die einzelnen Verbindungsschienen (11, 12, 13, 14, 15, 16) mindestens einen Bereich (K1, K2, K3) aufweisen, in welchem mindestens zwei Verbindungsschienen (11, 12, 13, 14, 15, 16) zueinander parallel und unmittelbar nebeneinander geführt werden und während des Umschaltens zwischen zwei Schaltzuständen die Stromflussrichtungen gleich sind, so dass die durch die Stromänderung in einer Verbindungsschiene erzeugte Flussänderung zumindest teilweise durch die Stromänderung in der anderen Verbindungsschiene ausgeglichen werden kann und **dadurch gekennzeichnet, dass** jeweils genau zwei Verbindungsschienen (11, 12, 13, 15, 16), welche der Kontaktierung eines einzelnen Halbleiterschaltelements (A, B, C, D) dienen, im Bereich der Anschlüsse des jeweiligen Halbleiterschaltelementes parallel zueinander und unmittelbar nebeneinander ausgeführt sind.

2. Schaltungsanordnung nach Anspruch 1,
**dadurch gekennzeichnet, dass**
die einzelnen Halbleiterschaltelemente des ersten (A, B) und zweiten (C, D) Paares der in Serie geschalteten Halbleiterschaltelemente jeweils entlang einer ersten Ausdehnungsrichtung (R1) in einer Reihe und die beiden Paare parallel zueinander entlang einer zweiten, gegenüber der ersten um 90 Grad gedrehten, Ausdehnungsrichtung (R2) auf dem Kühlkörper (10) angeordnet sind, wobei zwischen den beiden Paaren in Serie geschalteter Halbleiterschaltelemente die Schaltungsmittel (M1, M2) für die Verbindung des DC-Null-Potentials mit dem AC-Anschluss (4) angeordnet sind, wobei einzelne Verbindungsschienen (11, 15) zum elektrischen Verbinden der Halbleiterschaltelemente (A, D) mit dem positiven und mit dem negativen DC-Potential vorgesehen sind, welche mindestens einen rechten Winkel in der Ebene der Kühlfläche des Kühlkörpers (10) aufweisen, und einzelne Verbindungsschienen (12, 16) zum elektrischen Verbinden der in Serie geschalteten Halbleiterschaltelemente (A, B sowie C, D) vorgesehen sind, welche mindestens zwei rechte Winkel in der Ebene der Kühlfläche des Kühlkörpers (10) aufweisen.

3. Schaltungsanordnung nach Anspruch 1 oder 2,
**dadurch gekennzeichnet, dass**
die Verbindungsschienen (11, 12, 13, 15, 16) mindestens eine zumindest teilweise in eine Ebene, welche parallel zu der Ebene der Kühlfläche des Kühlkörpers (10) ausgerichtet ist, abgewinkelte Lasche (11a, 12a, 12c, 13a, 13b, 15a, 16a, 16c) zur Kontaktierung der Halbleiterschaltelemente (A, B, C, D) aufweisen.

4. Schaltungsanordnung nach einem der Ansprüche 1 bis 3,
**dadurch gekennzeichnet, dass**
die zwei Schaltungsmittel (M1, M2) in einem gemeinsamen Gehäuse (9) oder in zwei einzelnen Gehäusen (9, 9') angeordnet sind.

5. Schaltungsanordnung nach einem der Ansprüche 1 bis 4,
**dadurch gekennzeichnet, dass**
die Verbindungsschiene (13), welche den AC- Anschluss (4) mit den Anschlüssen (13a, 13b) der Halbleiterschaltelemente verbindet, als gerade Schiene oder als hut-förmige Schiene ausgebildet ist.

6. Schaltungsanordnung nach einem der Ansprüche 1 bis 5,
**dadurch gekennzeichnet, dass**
die Verbindungsschienen (12, 16), welche die in Serie geschalteten Halbleiterschaltelemente elektrisch miteinander verbinden, zusätzlich jeweils mindestens eine in eine Ebene, welche parallel zu der Ebene der Kühlfläche des Kühlkörpers (10) ausgerichtet ist, abgewinkelte Lasche (12b, 16b) zur Kontaktierung eines Schaltungsmittels (M1, M2) aufweisen.

7. Schaltungsanordnung nach einem der Ansprüche 1 bis 6,
**dadurch gekennzeichnet, dass**
zum Verbinden des DC-Null-Potentials mit den zwei Schaltungsmitteln (M1, M2) eine Verbindungsschiene (14) vorgesehen ist, welche mindestens eine, vorzugsweise zwei in eine Ebene, welche parallel zu der Ebene der Kühlfläche des Kühlkörpers (10) ausgerichtet ist, abgewinkelte Lasche oder Laschen (14a, 14b) zur Kontaktierung der Schaltungsmittel (M1, M2) aufweist.

8. Schaltungsanordnung nach einem der Ansprüche 1 bis 7,
**dadurch gekennzeichnet, dass**
unter Ausnahme der abgewinkelten Laschen (11a, 12a, 12b, 12c, 13a, 13b, 14a, 14b, 15a, 16a, 16b, 16c) zum Anschließen der Schaltungsmittel und der Halbleiterschaltelemente, der Anschlüsse der DC-Potentiale (1, 2, 3) und des AC-Anschlusses (4) stets zwei Verbindungsschienen (11, 12, 13, 14, 15, 16) parallel und unmittelbar nebeneinander angeordnet sind.

9. Schaltungsanordnung nach einem der Ansprüche 1 bis 8,
**dadurch gekennzeichnet, dass**
die Verbindungsschienen (11, 12, 13, 14, 15, 16) isolierend beschichtetet sind und/oder Isolationsmittel zwischen den Verbindungsschienen angeordnet sind.

10. Schaltungsanordnung nach einem der Ansprüche 1 bis 9,
**dadurch gekennzeichnet, dass**
die DC-Anschlüsse (1, 2, 3) in einer Ebene senkrecht zur Ebene der Kühlfläche und parallel zur Anordnung der Halbleiterschaltelemente (A, D), welche mit dem positiven respektive mit dem negativen DC-Potential verbunden sind, verlaufen.

11. Schaltungsmodul (18) mit mindestens zwei Schaltungsanordnungen (17) nach einem der Ansprüche 1 bis 10,
**dadurch gekennzeichnet, dass**
mindestens zwei Schaltungsanordnungen (17) einen gemeinsamen Kühlkörper (10) aufweisen, der Kühlkörper (10) eine einer ersten Kühlfläche gegenüberliegende zweite Kühlfläche aufweist und auf jeder dieser beiden Kühlflächen mindestens eine Schaltungsanordnung (17) eines Phasenarms eines 3-Punkt-Umrichters mit Halbleiterschaltelementen, Schaltungsmitteln und Verbindungsschienen vorgesehen ist, wobei vorzugsweise die DC-Anschlüsse beider Phasenarme in der gleichen Ebene verlaufen.

12. Schaltschrank (19) umfassend mindestens eine Schaltungsanordnung nach einem der Ansprüche 1 bis 10 oder mindestens ein Schaltungsmodul nach Anspruch 11.

13. Schaltschrank nach Anspruch 12,
**dadurch gekennzeichnet, dass**
insgesamt drei Schaltungsmodule (18) umfassend insgesamt sechs Schaltungsordnungen (17) für drei Eingangsphasenarme und drei Ausgangsphasenarme vorgesehen sind.

14. Vorrichtung zur Erzeugung von elektrischer Energie, insbesondere Windkraftanlage (34), umfassend mindestens einen Schaltschrank (19) nach einem der Ansprüche 12 oder 13.

## Claims

1. Circuit arrangement of a phase leg of a three-point converter comprising:
- three DC connections (1, 2, 3) for positive, negative and zero potential and an AC connection (4),
- a first pair of series-connected semiconductor switching elements (A, B) connecting the positive DC potential to the AC connection (4),
- a second pair of series-connected semiconductor switching elements (C, D) connecting the negative DC potential to the AC connection (4),
- two circuit means (M1, M2) connecting the DC zero potential to the AC connection (4) via, in each case, one of the series-connected semiconductor switching elements of each pair (B, C),
- a heat sink (10) having a first cooling surface, the semiconductor switching elements (A, B, C, D) and the circuit means (M1, M2) being installed in a common plane on the first cooling surface of the heat sink,
- connecting bars (11, 12, 13, 14, 15, 16) that extend perpendicularly to the first cooling surface of the heat sink (10) and provide an electrical connection of the semiconductor switching elements (A, B, C, D) to the circuit means (M1, M2), the DC connections (1, 2, 3) and the AC connection (4) of the circuit arrangement, the connecting bars (11, 12, 13, 14, 15, 16) having means for establishing contact with the semiconductor switching elements (A, B, C, D), wherein
the individual connecting bars (11, 12, 13, 14, 15, 16) have at least one region (K1, K2, K3) in which at least two connecting bars (11, 12, 13, 14, 15, 16) are arranged parallel and directly adjacent to one another and, during switching over between two switching states, the current flow directions are identical, so that the flux change generated by the current change in one connecting bar can be at least partially compensated by the current change in the other connecting bar, and
**characterized in that**
in each case exactly two connecting bars (11, 12, 13, 15, 16), which serve to contact an individual semiconductor switching element (A, B, C, D), are arranged parallel and directly adjacent to one another in the region of the connections of the respective semiconductor switching element.

2. Circuit arrangement according to claim 1,
**characterized in that**
the individual semiconductor switching elements of the first (A, B) and second (C, D) pair of the series-connected semiconductor switching elements are respectively arranged in a row along a first extension direction (R1) and the two pairs are arranged on the heat sink (10) parallel to one another along a second extension direction (R2) rotated by 90 degrees with respect to the first extension direction (R1), the circuit means (M1, M2) for connecting the DC zero potential to the AC connection (4) are arranged between the two pairs of series-connected semiconductor switching elements, wherein individual connecting bars (11, 15) are provided for electrically connecting the semiconductor switching elements (A, D) to the positive and to the negative DC potential, which have at least one right angle in the plane of the cooling surface of the heat sink (10), and individual connecting bars (12, 16) are provided for electrically connecting the series-connected semiconductor switching elements (A, B and C, D), which have at least two right angles in the plane of the cooling surface of the heat sink (10).

3. Circuit arrangement according to claim 1 or 2,
**characterized in that**
the connecting bars (11, 12, 13, 15, 16) have at least one bracket (11a, 12a, 12c, 13a, 13b, 15a, 16a, 16c) angled at least partially in a plane which is aligned parallel to the plane of the cooling surface of the heat sink (10) for establishing electrical contact with the semiconductor switching elements (A, B, C, D).

4. Circuit arrangement according to any one of claims 1 to 3,
**characterized in that**
the two circuit means (M1, M2) are arranged in a common housing (9) or in two individual housings (9, 9').

5. Circuit arrangement according to any one of claims 1 to 4,
**characterized in that**
the connecting bar (13), which connects the AC connection (4) to the connections (13a, 13b) of the semiconductor switching elements, is formed as a straight bar or as a hat-shaped bar.

6. Circuit arrangement according to any one of claims 1 to 5,
**characterized in that**
the connecting bars (12, 16), which electrically connect to one another the series-connected semiconductor switching elements, additionally have in each case at least one bracket (12b, 16b) angled in a plane that is aligned parallel to the plane of the cooling surface of the heat sink (10), for establishing electrical contact with a circuit means (M1, M2).

7. Circuit arrangement according to any one of claims 1 to 6,
**characterized in that**
for connecting the DC zero potential to the two circuit means (M1, M2), a connecting bar (14) is provided which has at least one, preferably two, bracket or brackets (14a, 14b)angled in a plane that is aligned parallel to the plane of the cooling surface of the heat sink (10), for establishing electrical contact with the circuit means (M1, M2).

8. Circuit arrangement according to any one of claims 1 to 7,
**characterized in that**
with the exception of the angled brackets (11a, 12a, 12b, 12c, 13a, 13b, 14a, 14b, 15a, 16a, 16b, 16c) for the connection of the circuit means and the semiconductor switching elements, the connections of the DC potentials (1, 2, 3) and the AC connection (4), two connecting bars (11, 12, 13, 14, 15, 16) are always arranged parallel and directly adjacent to one another.

9. Circuit arrangement according to any one of claims 1 to 8,
**characterized in that**
the connecting bars (11, 12, 13, 14, 15, 16) are coated in an insulating manner and/or insulating means are arranged between the connecting bars.

10. Circuit arrangement according to any one of claims 1 to 9,
**characterized in that**
the DC connections (1, 2, 3) extend in a plane perpendicular to the plane of the cooling surface and parallel to the arrangement of the semiconductor switching elements (A, D) which are connected to the positive or negative DC potential, respectively.

11. Circuit module (18) with at least two circuit arrangements (17) according to any one of claims 1 to 10,
**characterized in that**
at least two circuit arrangements (17) have a common heat sink (10), the heat sink (10) has a second cooling surface opposite a first cooling surface and at least one circuit arrangement (17) of a phase leg of a three-point converter having semiconductor switching elements, circuit means and connecting bars is provided on each of these two cooling surfaces, the DC connections of the two phase legs preferably extending in the same plane.

12. Switch cabinet (19) comprising at least one circuit arrangement according to any one of claims 1 to 10 or at least one circuit module according to claim 11.

13. Switch cabinet according to claim 12,
**characterized in that**
a total of three circuit modules (18) comprising a total of six circuit arrangements (17) for three input phase legs and three output phase legs are provided.

14. Device for generating electrical energy, in particular a wind turbine (34), comprising at least one switch cabinet (19) according to any one of claims 12 or 13.

## Revendications

1. Disposition de circuit d'un bras de phase d'un onduleur 3 points:
- trois connexions CC (1, 2, 3) pour potentiel positif, négatif et nul et une connexion CA (4),
- une première paire d'éléments de commutation à semi-conducteurs connectés en série (A, B) connectant le potentiel CC positif à la connexion CA (4),
- une deuxième paire d'éléments de commutation à semi-conducteurs connectés en série (C, D) connectant le potentiel CC négatif à la connexion CA (4),
- deux moyens de circuit (M1, M2) connectant le potentiel zéro DC à la connexion CA (4) via chacun des éléments de commutation à semi-conducteurs connectés en série de chaque paire (B, C),
- un dissipateur thermique (10) ayant une première surface de refroidissement, les éléments de commutation à semi-conducteurs (A, B, C, D) et les moyens de circuit (M1, M2) étant montés dans un plan commun sur la première surface de refroidissement du dissipateur thermique,
- barre de connexion (11, 12, 13, 14, 15, 16) qui s'étendent perpendiculairement à la première surface de refroidissement du dissipateur thermique (10) et assurent une connexion électrique des éléments de commutation à semi-conducteurs (A, B, C, D) aux moyens de circuit (M1, M2), aux connexions CC (1, 2, 3) et à la connexion CA (4) du circuit, les barres de connexion (11, 12, 13, 14, 15, 16) comprenant des moyens pour établir le contact avec les éléments de commutation à semi-conducteurs (A, B, C, D), les barres de connexion individuelles (11, 12, 13, 14, 15, 16) présentent au moins une région (K1, K2, K3) dans laquelle au moins deux barres de connexion (11, 12, 13, 14, 15, 16) sont guidés parallèlement l'une à l'autre et directement à côté de l'autre et les directions de courant sont les mêmes pendant la commutation entre deux états de commutation, de sorte que la variation de flux générée par la variation de courant dans l'une des barres de connexion peut être compensée au moins partiellement par la variation de courant dans l'autre barre de connexion, et **caractérisé en ce que** deux barres de connexion (11, 12, 13, 15, 16) servant à contacter un élément de commutation semi-conducteur individuel (A, B, C, D) sont chacun conçus parallèlement l'un à l'autre et directement à côté de l'autre au niveau des connexions de chaque élément de commutation semi-conducteur.

2. Disposition de circuit selon la revendication 1,
**caractérisé en ce que**
les éléments de commutation à semi-conducteurs individuels des première (A, B) et deuxième (C, D) paires des éléments de commutation à semi-conducteurs connectés en série sont disposés en ligne le long d'une première direction d'expansion (R1), et les deux paires sont disposées en parallèle l'une à l'autre dans une deuxième direction d'expansion (R2), tournant de 90 degrés par rapport à la première direction, sur le dissipateur thermique (10), entre les deux paires des éléments de commutation à semi-conducteur connectés en série, les moyens de circuit (M1, M2) pour relier le potentiel zéro DC à la connexion CA (4) sont disposés, dans laquelle des barres de connexion individuelles (11, 15) sont prévues pour connecter électriquement les éléments de commutation à semi-conducteurs (A, D) au potentiel CC positif et au potentiel CC négatif, qui présentent au moins un angle droit dans le plan de la surface de refroidissement du dissipateur thermique (10), et des barres de connexion individuelles (12, 16) sont prévues pour connecter électriquement les éléments de commutation à semi-conducteurs connectés en série (A, B et C, D), qui présentent au moins deux angles droits dans le plan de la surface de refroidissement du dissipateur thermique (10).

3. Disposition de circuit selon la revendication 1 ou 2,
**caractérisé en ce que**
les barres de connexion (11, 12, 13, 15, 16) présentent au moins une patte (11a, 12a, 12c, 13a, 13b, 15a, 16a, 16c) qui est inclinée au moins partiellement dans un plan qui est aligné parallèlement au plan de la surface de refroidissement du dissipateur thermique (10) pour entrer en contact avec les éléments de commutation à semi-conducteurs (A, B, C, D).

4. Disposition de circuit selon l'une des revendications 1 à 3,
**caractérisé en ce que**
les deux moyens de circuit (M1, M2) sont disposés dans un boîtier commun (9) ou dans deux boîtiers individuels (9, 9').

5. Disposition de circuit selon l'une des revendications 1 à 4,
**caractérisé en ce que**
la barre de connexion (13), qui relie la connexion CA (4) aux connexions (13a, 13b) des éléments de commutation à semi-conducteur, est réalisé sous la forme d'une barre droite ou d'une barre à chapeau.

6. Disposition de circuit selon l'une des revendications 1 à 5,
**caractérisé en ce que**
les barres de connexion (12, 16), qui relient électriquement les éléments de commutation à semi-conducteurs montés en série, comportent en outre au moins une patte (12b, 16b) qui est inclinée dans un plan parallèle au plan de la surface de refroidissement du dissipateur thermique (10) et qui est destinée à venir en contact avec un moyen de circuit (M1, M2).

7. Disposition de circuit selon l'une des revendications 1 à 6,
**caractérisé en ce que**
pour connecter le potentiel zéro DC aux deux moyens de circuit (M1, M2), il est prévu une barre de connexion (14) qui présente au moins une patte ou de préférence deux pattes (14a, 14b) inclinées dans un plan parallèle au plan de la surface de refroidissement du dissipateur thermique (10), pour établir un contact avec les moyens de circuit (M1, M2).

8. Disposition de circuit selon l'une des revendications 1 à 7,
**caractérisé en ce qu'**
à l'exception des pattes inclinées (11a, 12a, 12b, 12c, 13a, 13b, 14a, 14b, 15a, 16a, 16b, 16c) pour relier les moyens de circuit et les éléments de commutation à semi-conducteurs, les connexions des potentiels DC (1, 2, 3) et la connexion AC (4), deux barres de connexion (11, 12, 13, 14, 15, 16) sont toujours disposées parallèlement et directement à côté l'une de l'autre.

9. Disposition de circuit selon l'une des revendications 1 à 8,
**caractérisé en ce que**
les barres de connexions (11, 12, 13, 14, 15, 16) sont revêtues de manière isolante et/ou des moyens isolants sont disposés entre les barres de connexion.

10. Disposition de circuit selon l'une des revendications 1 à 9,
**caractérisé en ce que**
les connexions CC (1, 2, 3) s'étendent dans un plan perpendiculaire au plan de la surface de refroidissement et parallèle à la disposition des éléments de commutation à semi-conducteurs (A, D) qui sont connectés au potentiel CC positif ou négatif, respectivement.

11. Module de circuit (18) avec au moins deux dispositions de circuit (17) selon l'une des revendications 1 à 10,
**caractérisé en ce qu'**
au moins deux dispositions de circuit (17) présentent un dissipateur thermique commun (10), le dissipateur thermique (10) présente une seconde surface de refroidissement opposée à une première surface de refroidissement, et au moins un disposition de circuit (17) d'un bras de phase d'un onduleur 3 points comportant des éléments de commutation à semi-conducteurs, des moyens de circuit et des barres de connexion est prévu sur chacune de ces deux surfaces de refroidissement, les connexions CC des deux bras de phase se trouvant de préférence dans le même plan.

12. Armoire de commande (19) comprenant au moins une disposition de circuit selon l'une des revendications 1 à 10 ou au moins un module de circuit selon la revendication 11.

13. Armoire de commande selon la revendication 12,
**caractérisé en ce qu'**
un total de trois modules de circuit (18) comprenant un total de six dispositions de circuit (17) pour trois bras de phase d'entrée et trois bras de phase de sortie sont fournis.

14. Dispositif de production d'énergie électrique, en particulier une installation éolienne (34), comprenant au moins une armoire de commande (19) selon l'une des revendications 12 ou 13.
